# EUROPÄISCHE PATENTSCHRIFT

(11) **EP 0 551 534 B1**
(45) Veröffentlichungstag und Bekanntmachung des Hinweises auf die Patenterteilung: **26.10.1994**
(21) Anmeldenummer: 92100377.8
(22) Anmeldetag: 11.01.1992
(51) Int. Cl.: F24D 17/00, F24D 19/10

(54) **Warmwasserbereitungsanlage**
Hot-water preparation system
Installation de préparation d'eau chaude

(43) Veröffentlichungstag der Anmeldung: 21.07.1993
(73) Patentinhaber: RITTER ENERGIE- und UMWELTTECHNIK GmbH & CO. KG., 75173 Pforzheim (DE)
(72) Erfinder: Taafel, Klaus, Dipl.-Ing., W-7530 Pforzheim (DE)
(74) Vertreter: Trappenberg, Hans

(56) Entgegenhaltungen:
- EP-A- 0 003 924
- DE-A- 2 947 382
- PATENT ABSTRACTS OF JAPAN vol. 10, no. 207 (M-500)(2263) 19. Juli 1986 & JP-A-61 046 849 (MATSUSHITA ELECTRIC IND CO LTD) 7. März 1986

## Beschreibung

Die Erfindung betrifft eine Warmwasserbereitungsanlage mit einem als Schichtenspeicher ausgeführten Brauchwasserspeicher mit zwei Wärmezuführrohren, von denen das eine im obersten Bereich, in dem sich ein Brauchwassermindestvolumen befindet, und das andere unterhalb dieses Brauchwasservolumens endet, mit einem externen Wärmetauscher für einen mit einer Heizquelle verbundenen Primärkreis sowie einem das Brauchwasser führenden Sekundärkreis mit jeweils einer in den jeweiligen Kreis eingefügten Umwälzpumpe.

Ähnliche Warmwasserbereitungsanlagen, beispielsweise nach der DE-OS 28 13 620, im allgemeinen kombiniert mit einer Warmwasser-Heizung, werden üblicherweise mit fossilen Brennstoffen und hier insbesondere mit Heizöl betrieben. Aus Gründen des Umweltschutzes sollte jedoch die Verbrennung fossiler Brennstoffe vermindert und sollten mehr alternative Heizquellen, wie Solarenergie, Bioreaktoren, geothermische Energie etc. vermehrt eingesetzt werden. Der Nachteil bei manchen dieser alternativen Energiequellen ist jedoch, daß sie nicht stets verfügbar sind. Aufgabe der Erfindung ist es mithin, eine Warmwasserbereitungsanlage anzugeben, die es erlaubt, die gewünschte beziehungsweise benötigte thermische Energie unter Bevorzugung einer Alternativenergie, vorzugsweise der Solarenergie, zur Verfügung zu stellen. Erreicht wird dies bei einer derartigen eingangs beschriebenen Warmwasserbereitungsanlage dadurch, daß der Wärmetauscher zwei Primärkreise aufweist, einen Primärkreis I, dessen Heizquelle stets verfügbar ist, und einen Primärkreis II, dessen Heizquelle nicht stets verfügbar ist, die hydraulisch voneinander und vom Sekundärkreis völlig entkoppelt sind, daß die Drehzahl der Umwälzpumpen steuerbar ist und daß eine die Primärkreise I und II sowie den Sekundärkreis erfassende, über die Drehzahl der Umwälzpumpen auf die Massenströme der Hydraulikkreise einwirkende temperaturabhängige Regelung vorgesehen ist.

Die Bereitstellung des Warmwassers erfolgt bei der erfindungsgemäßen Anlage also sowohl durch Heizquellen, die stets zur Verfügung stehen, wie insbesondere mit Öl oder Erdgas betriebene Heizkessel, aber auch in gewissem Rahmen Bioreaktoren oder geothermische Energie, wie auch durch Heizquellen, deren Verfügbarkeit nicht stets gegeben ist, wie insbesondere die Solarenergie oder möglicherweise auch über Windkraft erzeugte thermische Energie. Beide Primärkreise I und II führen ihre thermische Energie einem Dreikreis-Wärmetauscher zu, der Wärmetausch-Vorrichtungen beziehungsweise -Einrichtungen enthält für den Primärkreis I, für den Primärkreis II, wie auch für den Sekundärkreis. Die Zufuhr der thermischen Energie zu diesem Wärmetauscher erfolgt über die geregelte Zufuhr der durch die jeweiligen Heizquellen aufgeheizten Warmwasserströme über die drehzahlveränderbaren Umwälzpumpen, wobei die Drehzahl dieser Umwälzpumpen durch eine gemeinsame temperaturabhängige Regelung bestimmt wird. Diese Regelung berücksichtigt hierbei nicht nur, wie übliche derartige Temperatursteuerungen, die Brauchwassertemperatur, sondern auch die Temperatur der von den Heizquellen ankommenden Warmwasserströme und die in unterschiedlichen Höhen im Brauchwasserspeicher vorherrschenden Temperaturen, so daß sich in der Zuleitung zum Brauchwasserspeicher eine konstante Solltemperatur einstellt. Ohne Schwierigkeiten kann dabei die zu bevorzugende Solarenergie Priorität bei der Warmwasserbereitung erhalten, dann, wenn genügend Solarenergie zur Verfügung steht, es kann aber auch die im Heizkessel erzeugte Energie dann bevorzugt zur Warmwasserbereitung herangezogen werden, wenn die Temperatur im Solarkreis nicht ausreicht, um den Sekundärkreis auf die notwendige Solltemperatur zu bringen.

Damit wäre bereits die oben gestellte Aufgabe gelöst, jedoch gehört es noch zu dieser Aufgabe, den Heizenergieeinsatz weitgehend zu minimieren. Hierzu gehört nach der Erfindung, daß sich sämtliche Wasseranschlüsse des Brauchwasserspeichers in dessen unterem Bereich befinden. Im gleichen Sinne wirkt auch, daß der Wärmetauscher unterhalb des Brauchwasserspeichers, innerhalb dessen Mantelisolation angeordnet ist. Hierbei soll der Wärmetauscher sowohl nach oben, gegen den Brauchwasserspeicher hin, wie auch nach unten, zur Brauchwasserspeicher-Standfläche hin, wärmeisoliert sein.

Empfohlen wird nach der Erfindung, daß die Drehzahl der Umwälzpumpen im Wege des Pulspaketverfahrens stufenlos einstellbar ist. Diese Drehzahlsteuerung ist ausreichend präzise, mit verhältnismäßig einfachen Mitteln zu verwirklichen und für die meisten Pumpenmotoren ohne weiteren Aufwand sofort anwendbar.

Es wurde schon angeführt, daß sich Temperaturfühler in verschiedenen Höhen im Brauchwasserspeicher befinden. Nach der Erfindung wird vorgeschlagen, daß sich die Temperaturfühler für die temperaturabhängige Regelung im oberen und im unteren Bereich des Brauchwassermindestvolumens, im unteren Bereich des Brauchwasserspeichers, in der Vorlaufleitung des Sekundärkreises sowie in den beiden Vorlaufleitungen der Primärkreise befinden. Durch diese Anordnung der Temperaturfühler wie auch derjenigen der Zuführrohre im Speicher wird eine Temperaturschichtung im Brauchwasserspeicher erreicht, die zu bestimmten Zeiten wenigstens ein Brauchwassermindestvolumen mit einer gewünschten Solltemperatur im oberen Bereich des Brauchwasserspeichers bereithält. Wird nach einem weiteren Erfindungsmerkmal im Rücklauf des Wärmetauschers ein thermostatisch steuerbares Dreiwegeventil vorgesehen, das zum einen zum unterhalb des Brauchwassermindestvolumen endenden Wärmezuführrohr und zum anderen zum im obersten Bereich des Brauchwasserspeichers endenden Wärmezuführrohr und gleichzeitig zur Brauchwasserleitung verzweigt, führt jede bei der nicht stets verfügbaren Heizquelle anfallende Wärme zur schichtweisen Durchladung des gesamten Speichers von oben nach unten, wobei die Brauchwasser-Solltemperatur nicht unterschritten wird, solange, bis der Speicher eine vorgebbare Maximaltemperatur erreicht hat. Hierbei kann jedoch bereits auf Solltemperatur erwärmtes Wasser über die Brauchwasserleitung entnommen werden.

Insgesamt ergibt sich hierdurch eine Warmwasserbereitungsanlage, die in der Lage ist, sowohl stets zur Verfügung stehende wie auch nur zeitweise zur Verfügung stehende Heizenergie optimal bei Vorgabe einer bestimmten Solltemperatur unter Bevorzugung der die Umwelt nicht belastenden Heizenergie einzusetzen.

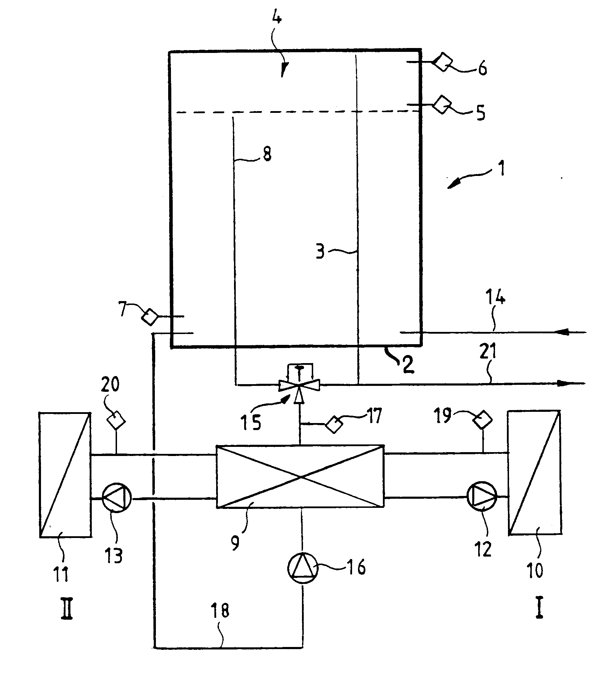

Auf der Zeichnung ist ein Ausführungsbeispiel der Anlage nach der Erfindung schematisch dargestellt. Mit (1) ist hier ein Brauchwasserspeicher bezeichnet, von dessen Boden (2) ein Zuführrohr (3) zur obersten Stelle des Brauchwasserspeichers (1) führt. Der "obere Bereich" (4) stellt das Brauchwassermindestvolumen dar, in dessen oberen Bereich sich der Temperaturfühler (6) befindet. Die Untergrenze dieses Brauchwassermindestvolumens (4) ist durch eine gestrichelt eingezeichnete Linie markiert, auf deren Höhe ein weiterer Temperaturfühler (5) angebracht ist. Ein weiterer Temperaturfühler (7) ist beim Boden (2) des Brauchwasserspeichers (1) angeordnet. Unterhalb der Schicht des Brauchwassermindestvolumens (4) endet ein weiteres Wärmezuführrohr (8), das ebenfalls am Boden (2) des Brauchwasserpeichers (1) eintritt.

## Patentansprüche

1. Warmwasserbereitungsanlage mit einem als Schichtenspeicher ausgeführten Brauchwasserspeicher (1) mit zwei Wärmezuführrohren (3, 8), von denen das eine (3) im obersten Bereich, in dem sich ein Brauchwassermindestvolumen (4) befindet, und das andere (8) unterhalb des Brauchwassermindestvolumens endet, mit einem externen Wärmetauscher (9) für einen mit einer Heizquelle (10, 11) verbundenen Primärkreis sowie einem das Brauchwasser führenden Sekundärkreis mit jeweils einer in den jeweiligen Kreis eingefügten Umwälzpumpe (12, 13, 16),
dadurch gekennzeichnet,
daß der Wärmetauscher (9) zwei Primärkreise I und II aufweist, einen Primärkreis I, dessen Heizquelle (10) stets verfügbar ist, und einen Primärkreis II, dessen Heizquelle (11) nicht stets verfügbar ist, die hydraulisch voneinander und vom Sekundärkreis (18) völlig entkoppelt sind, daß die Drehzahl der Umwälzpumpen (12, 13, 16) steuerbar ist und daß eine die Primärkreise I und II sowie den Sekundärkreis (18) erfassende, über die Drehzahl der Umwälzpumpen (12, 13, 16) auf die Massenströme der Hydraulikkreise I und II (18) einwirkende temperaturabhängige Regelung vorgesehen ist.

2. Anlage nach Anspruch 1,
dadurch gekennzeichnet,
daß sich sämtliche Wasseranschlüsse des Brauchwasserspeichers (1) in dessen unterem Bereich befinden.

3. Anlage nach Anspruch 1 oder 2,
dadurch gekennzeichnet,
daß der Wärmetauscher (9) unterhalb des Brauchwasserspeichers (1) innerhalb einer Mantelisolation angeordnet ist.

4. Anlage nach Anspruch 3,
dadurch gekennzeichnet,
daß der Wärmetauscher (9) sowohl nach oben, gegen den Brauchwasserpeicher (1) hin, wie auch nach unten, zur Brauchwasserspeicher-Standfläche hin wärmeisoliert ist.

5. Anlage nach Anspruch 1,
dadurch gekennzeichnet,
daß die Drehzahl der Umwälzpumpen (12, 13, 16) im Wege des Pulspaketverfahrens stufenlos einstellbar ist.

6. Anlage nach Anspruch 1,
dadurch gekennzeichnet,
daß sich Temperaturfühler (5, 6, 7, 17, 19, 20) für die temperaturabhängige Regelung im oberen und im unteren Bereich des Brauchwassermindestvolumens (4), im unteren Bereich des Brauchwasserspeichers (1) in der Vorlaufleitung des Sekundärkreises sowie in den Vorläufen der Primärkreise I und II befinden.

7. Anlage nach Anspruch 1,
dadurch gekennzeichnet,
daß eine Verbindung (18) vom unteren Bereich des Brauchwasserspeichers (1) zum Sekundärkreis-Vorlauf des Wärmetauschers (9) vorgesehen ist.

8. Anlage nach Anspruch 1,
dadurch gekennzeichnet,
daß im Rücklauf des Wärmetauschers (9) ein thermostatisch steuerbares Dreiwegeventil (15) vorgesehen ist, das zum einen zum Wärmezuführrohr (8), zum anderen zum Wärmezuführrohr (3) und zur Brauchwasserleitung (21) verzweigt.

## Claims

1. A hot water installation having a storage means (1) for water for industrial use, which is in the form of a stratified storage means, with two heat supply pipes (3, 8) of which one (3) terminates in the uppermost region in which there is an industrial-use water minimum volume (4) and the other (8) terminates beneath the industrial-use water minimum volume, an external heat exchanger (9) for a primary circuit connected to a heat source (10, 11) and a secondary circuit carrying the industrial-use water, with a respective circulating pump (12, 13, 16) included in each circuit, characterised in that the heat exchanger (9) has two primary circuits I and II, a primary circuit I whose heat source (10) is always available and a primary circuit II whose heat source (11) is not always available, which are completely decoupled hydraulically from each other and from the secondary circuit (18), that the speed of rotation of the circulating pumps (12, 13, 16) is controllable, and that there is provided a temperature-dependent regulating means which involves the primary circuits I and II as well as the secondary circuit (18) and which acts by way of the speed of rotation of the circulating pumps (12, 13, 16) on the mass flows of the hydraulic circuits I and II (18).

2. An installation according to claim 1 characterised in that all water connections of the industrial-use water storage means (1) are disposed in the lower region thereof.

3. An installation according to claim 1 or claim 2 characterised in that the heat exchanger (9) is arranged beneath the industrial-use water storage means (1) within a casing insulation.

4. An installation according to claim 3 characterised in that the heat exchanger (9) is heat-insulated both upwardly, towards the industrial-use water storage means (1), and also downwardly, towards the surface on which the industrial-use water storage means stands.

5. An installation according to claim 1 characterised in that the speed of rotation of the circulating pumps (12, 13, 16) is steplessly adjustable by means of the pulse packet method.

6. An installation according to claim 1 characterised in that temperature sensors (5, 6, 7, 17, 19, 20) for the temperature-dependent regulating means are disposed in the upper and lower regions of the industrial-use water minimum volume (4), in the lower region of the industrial-use water storage means (1), in the flow line of the secondary circuit and in the flow lines of the primary circuits I and II.

7. An installation according to claim 1 characterised in that there is provided a connection (18) from the lower region of the industrial-use water storage means (1) to the secondary circuit feed of the heat exchanger (9).

8. An installation according to claim 1 characterised in that provided in the return from the heat exchanger (9) is a thermostatically controllable three-way valve (15) which branches on the one hand to the heat supply pipe (8) and on the other hand to the heat supply pipe (3) and to the industrial-use water line (21).

## Revendications

1. Installation de chauffe-eau comprenant un réservoir d'eau sanitaire (1) réalisé en tant qu'accumulateur à étages muni de tuyaux d'amenée de chaleur (3, 8) dont l'un (3) se termine dans la partie supérieure dans laquelle se trouve le volume minimal d'eau sanitaire (4), et l'autre (8) en dessous du volume minimal d'eau sanitaire, comprenant également un échangeur de chaleur (9) externe pour un circuit primaire relié à une source de chaleur (10, 11) ainsi qu'un circuit secondaire acheminant l'eau sanitaire qui comportent chacun une pompe de circulation (12, 13 ,16), caractérisée en ce que l'échangeur de chaleur (9) présente deux circuits primaires I et II, un circuit primaire I dont la source de chaleur (10) est toujours disponible et un circuit primaire II dont la source de chaleur (11) n'est pas toujours disponible, qui sont totalement indépendants l'un de l'autre et du circuit secondaire (18) du point de vue du système hydraulique, en ce que le régime des pompes de circulation (12, 13, 16) est réglable, et en ce qu'est prévue une régulation en fonction de la température qui englobe les circuits primaires I et II et le circuit secondaire (18) et qui agit sur les flux massiques des circuits hydrauliques I et II (18) par le biais du régime des pompes de circulation (12, 13, 16).

2. Installation selon la revendication 1, caractérisée en ce que tous les raccordements pour l'eau de l'accumulateur d'eau sanitaire (1) se trouvent dans la partie inférieure de ce dernier.

3. Installation selon la revendication 1 ou 2, caractérisée en ce que l'échangeur de chaleur (9) est placé sous l'accumulateur d'eau sanitaire (1), à l'intérieur d'une enveloppe isolante.

4. Installation selon la revendication 3, caractérisée en ce que l'échangeur de chaleur (9) est calorifugé à la fois vers le haut en direction de l'accumulateur d'eau sanitaire (1) et vers le bas en direction de la surface d'appui de l'accumulateur d'eau sanitaire.

5. Installation selon la revendication 1, caractérisée en ce que le régime des pompes de circulation (12, 13, 16) est réglable en continu par le procédé des paquets d'impulsions.

6. Installation selon la revendication 1, caractérisée en ce que des capteurs de température (5, 6, 7, 17, 19, 20) pour la régulation en fonction de la température se trouvent dans les parties supérieure et inférieure du volume minimal d'eau sanitaire (4), dans la partie inférieure de l'accumulateur d'eau sanitaire (1) et dans la conduite aller du circuit secondaire, ainsi que dans les conduites aller des circuits primaires I et II.

7. Installation selon la revendication 1, caractérisée en ce qu'est prévue une liaison (18) entre la partie inférieure de l'accumulateur d'eau sanitaire (1) et la conduite aller du circuit secondaire de l'échangeur de chaleur (9).

8. Installation selon la revendication 1, caractérisée en ce qu'un distributeur à trois voies (15) pouvant être commandé par un thermostat, qui distribue d'une part vers le tuyau d'amenée de chaleur (8), d'autre part vers le tuyau d'amenée de chaleur (3) et vers la conduite d'eau sanitaire (21), est prévu dans la conduite retour de l'échangeur de chaleur (9).
